# EUROPEAN PATENT APPLICATION

(11) **EP 1 178 664 A1**
(43) Date of publication of application: **06.02.2002**
(21) Application number: 01117752.4
(22) Date of filing: 31.07.2001
(51) Int. Cl.: H04N 1/047

(54) **Method, apparatus and computer program product for initializing image processing apparatus and image forming apparatus**

(30) Priority: 31.07.2000 JP 2000232198; 14.06.2001 JP 2001179562
(71) Applicant: Ricoh Company, Tokyo 143-8555 (JP)
(72) Inventor: Kanno, Tohru, Ohta-ku, Tokyo 143-8555 (JP)
(74) Representative: Schwabe - Sandmair - Marx

(57) **Abstract**

An image processing apparatus, method and computer program product, wherein an initializing process of a scanner is performed in a short period of time when a return operation from a shutdown state is performed. A carriage of the scanner stays in a white level range when the main body is put in the shutdown state. Thus, the scanner immediately makes an automatic adjustment to its image reading level when the return operation from the shutdown state is started. The carriage detects an original position for a scanning operation while it moves to a standby position after the automatic adjustment is made. Thereby, the initializing process of the scanner is performed eliminating an operation of the carriage in which the carriage moves to the white plate range to read the white plate.

## Description

### BACKGROUND OF THE INVENTION

### Field of the Invention

The present invention relates to a method and a computer program product for initializing a scanner to be used in an image processing forming apparatus, such as a multifunctional DPPC (i.e., Digital Plain Paper Copier), and more particularly to a method and a computer program product that can control a movement of a carriage of the scanner for performing an initializing process of the scanner in a short period of time.

### Discussion of the Background

A recently developed DPPC may be configured such that power is supplied to the whole system of the DPPC by turning on a power switch. Further, the DPPC may be put in a shutdown state by stopping the power supply to the main image forming components of the apparatus using a power key (e.g., a soft key) , except some power may still be supplied to a monitoring part. In these types of DPPC's, when a power switch is turned on, when a return operation from a shutdown state is performed, i.e. during start-up of the apparatus, when e.g. the main image forming components of the apparatus are reactivated, an initializing process of a scanner is performed. In the initializing process of the scanner, an automatic adjustment to a reading performance of the scanner is made after a home position determining operation of the scanner is completed. An image reading device carried by a carriage reads a white plate arranged above a track of the carriage. The read image is then converted into an electric signal by an image sensor (i.e., generally, a CCD linear image sensor is used).

The automatic adjustment to the reading performance of the scanner is made based on the output electric signal, e.g. of the image sensor. The output electric signal generated by reading the white plate includes various distortions caused by variations in a reading optical system, a lighting system, and an image sensor, etc. Therefore, shading data, for performing a correction in an analog signal process and an analog/digital conversion process which are performed in the signal process system of the image sensor, is acquired based on a detected value of the distortions. The automatic adjustment to the reading performance of the scanner is made based on the acquired shading data for correcting variations in the in a sensitivity of the sensor (i.e., CCD sensor) and an uneven distribution of light from the lighting system.

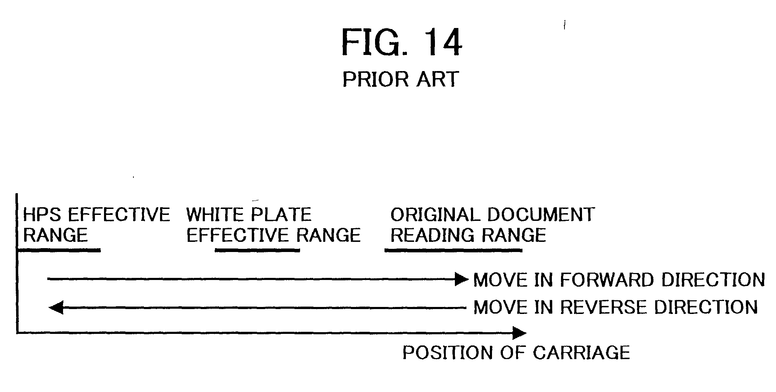

In the scanner, a movement of the carriage which carries the reading device is controlled according to respective conditions when an initializing process is performed or when an image reading operation of an original document is performed. As illustrated in Fig. 14, the carriage is controlled to move in a forward or in a reverse direction between a home position sensor detection range, a white plate detection range, and an original document reading range. The three ranges are provided in order along the track of the carriage. In the home position sensor detection range, an output of the home position sensor (i.e., HPS) to detect a position of the carriage is effective or operative. In the white plate detection range, the white plate is arranged and a white plate reading signal is effective or meaningful (or significant).

In an initializing process of the scanner, a home position determining operation, which is performed based on an output of the HPS, and a reading operation of the white plate are performed. The white plate is provided between the HPS detection range and the original document reading range.

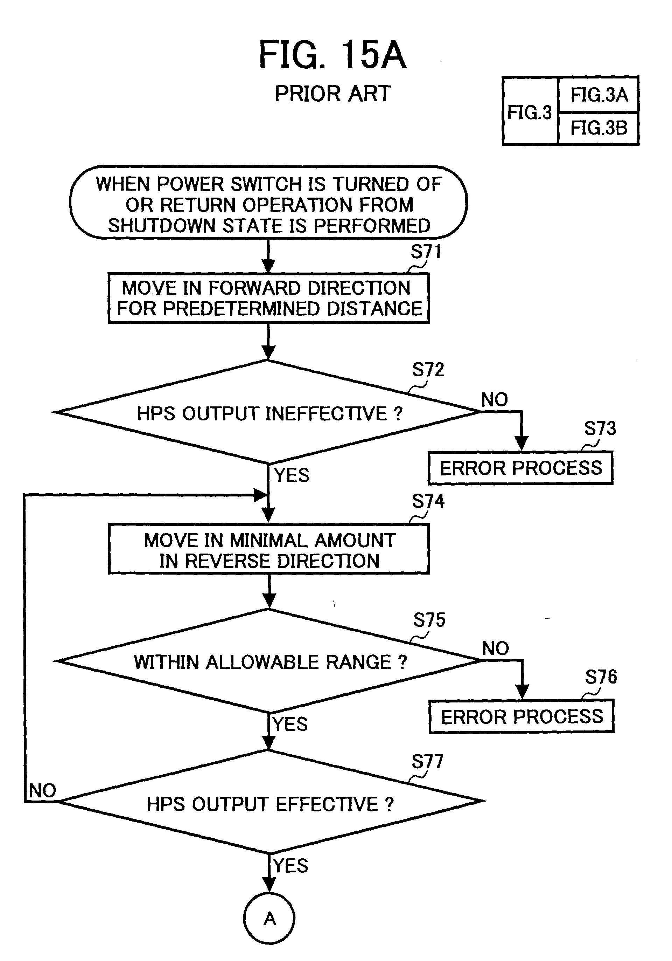

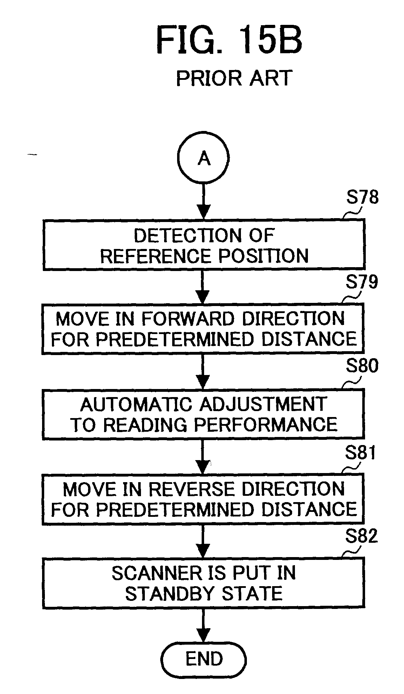

The initializing process is described below referring to a flowchart in Fig. 15 which illustrates initializing process steps of the scanner when a power switch is turned on or when a return operation from a shutdown state is performed.

According to the steps, the carriage firstly moves in a forward direction for a predetermined distance to reach a position where the output of the HPS is apparently ineffective or nominal at step S71. That is, the carriage moves toward the white plate or original document reading range until it reaches the position where the output of the HPS is ineffective or nominal after passing through a range where the output of the HPS is effective wherever the carriage is positioned. Then, whether or not the output of the HPS is ineffective is checked at step S72.

When it is determined that the output of the HPS is ineffective or nominal, whether or not the output of the HPS changes from being ineffective to being effective is checked at step S77 while the carriage is moved by a minimal amount in the reverse direction at step S74. When it is determined that the output of the HPS changes to being effective, the position of the scanner is detected at step S78 and determined as a reference position (i.e., a definite position) for a subsequent scanning operation. Thus, a home position determining operation is performed. If the output of the HPS does not change to being ineffective at step S72 even if the carriage is moved by the predetermined distance in the forward direction (i.e., No at step S72) or if the output of the HPS does not change to being effective even if the carriage is moved in the reverse direction within an allowable range at step 74 (i.e., No at step S75), it is determined that the scanner is malfunctioning. Error processes, for example, to stop the operation, are performed at steps S73 and S76.

The carriage then moves in the forward direction for a predetermined distance at step S79 from the detected reference position to reach a position where the white plate is read. An automatic adjustment to the reading performance of the scanner is made at step S80 based on a read value of the white plate. Once the adjustment has been made, the carriage moves for the predetermined distance in the reverse direction to a standby position (i.e., the reference position) at step S81. The scanner is put into a standby state in step S82. The process is then finished.

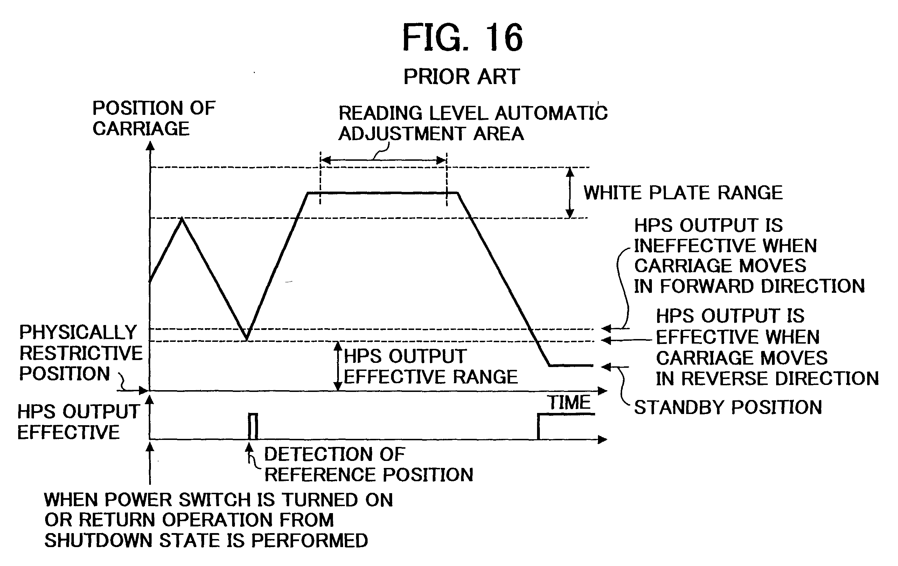

The initializing process operation performed according to the above-described processing steps is further explained referring to timing diagrams in Figs. 16 through 18 which show a mutual relationship between a position of the carriage and an output of the HPS.

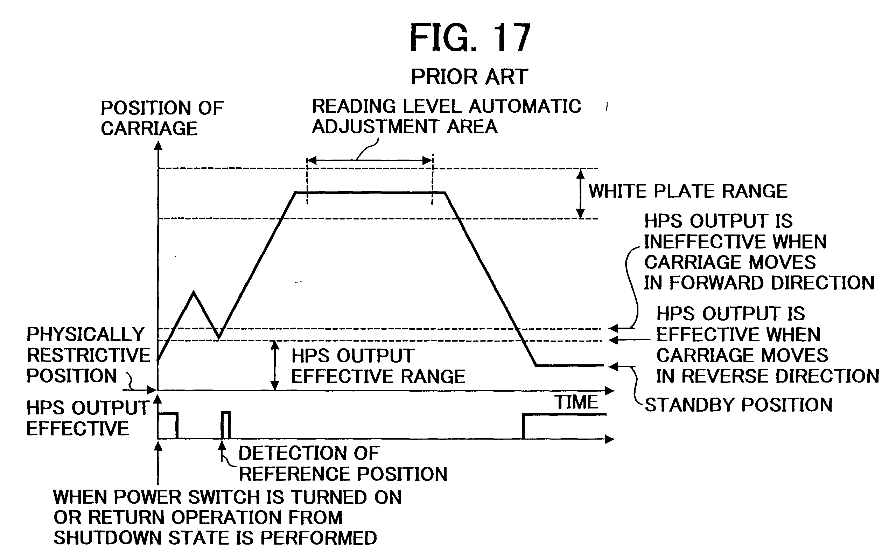

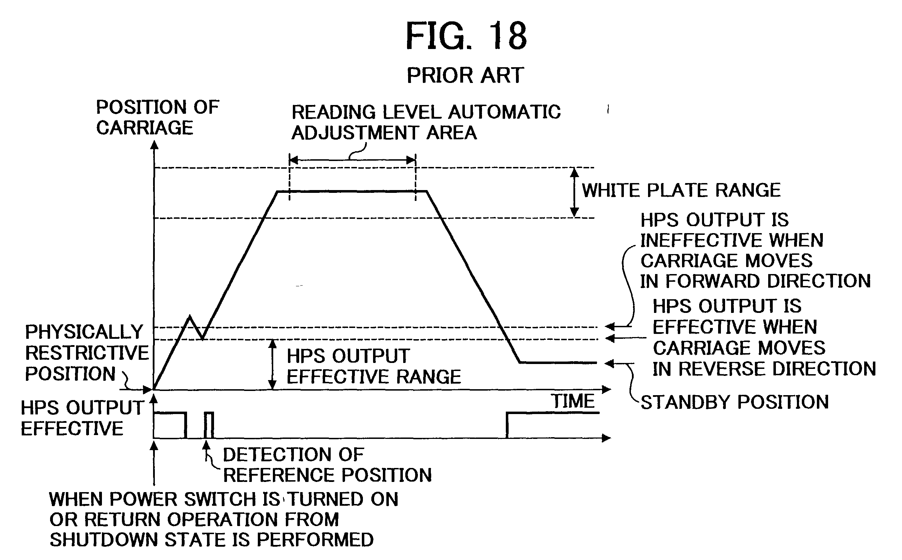

The timing diagrams in Figs. 16 through 18 illustrate that the carriage is located at different positions at a power-on time. In Fig. 16, the position of the carriage is shifted towards the white plate with respect to the point at which the output of the HPS changes to being effective. In Fig. 17, the carriage is positioned close to the point at which the output of the HPS changes to being effective. In Fig. 18, the position of the carriage is shifted to a physically restrictive position with respect to the point at which the output of the HPS changes to being effective. According to these examples of the present invention, a sensor having a hysteresis property, such that the point at which the output of the HPS changes differs according to the direction of movement, is used as the HPS to detect effective and ineffective positions. The reference position of the carriage is detected when the output of the sensor changes to being effective from being ineffective while the carriage moves in the reverse direction.

In any of these examples shown in Figs. 16 through 18, the home position determining operation is started after the carriage has moved in the forward direction for the predetermined distance to reach a position where the output of the HPS is apparently ineffective. That is, the reference position of the scanner for subsequent scanning operations is detected when the output of the HPS changes to being effective from being ineffective while the carriage is moving in the reverse direction. Therefore, the example shown in Fig. 16 (i.e., when the position of the carriage is shifted towards the white plate with respect to the point at which the output of the HPS changes to being effective when the power switch is turned on or a return operation from the shutdown state is performed) requires the longest period of time for detecting the reference position of the scanner among the examples shown in Figs. 16 through 18. The same operation is performed in any of the examples shown in Figs. 16 through 18 until the scanner is put in the standby state after the initializing process including the detection of the reference position of the scanner and the automatic adjustment to the reading performance of the scanner is completed. Thus, the example shown in Fig. 16 requires the longest period of time for a return operation from a shutdown state.

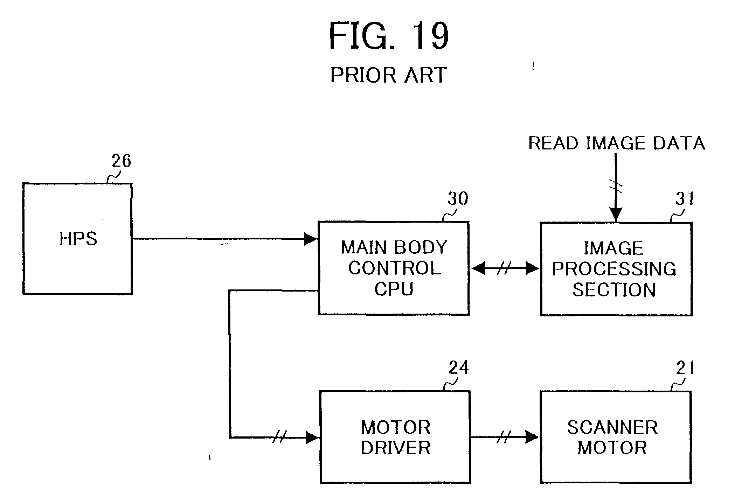

An initializing process of the scanner is thus performed by controlling a movement of the carriage as described above when a power switch is turned on or when a return operation from a shutdown state is performed. Generally, this initializing processing operation is directly controlled by a control section of a main body of the DPPC. Fig. 19 is a block diagram illustrating an example of a system for controlling an initializing process of the scanner. An output of a HPS 26 is input to a main body control CPU 30. The main body control CPU 30 directly controls a motor driver 24 for a scanner motor 21. The main body control CPU 30 controls each component of the DPPC including an image processing section 31 which processes read image data.

Therefore, an initializing process of the scanner, which is executed when a power switch is turned on or when a return operation from a shutdown state is performed, is performed based on a program of the main body. Because the initializing process of the scanner is performed after an initializing process of the main body is completed, a relatively long period of time is required before the scanner is put in a standby state.

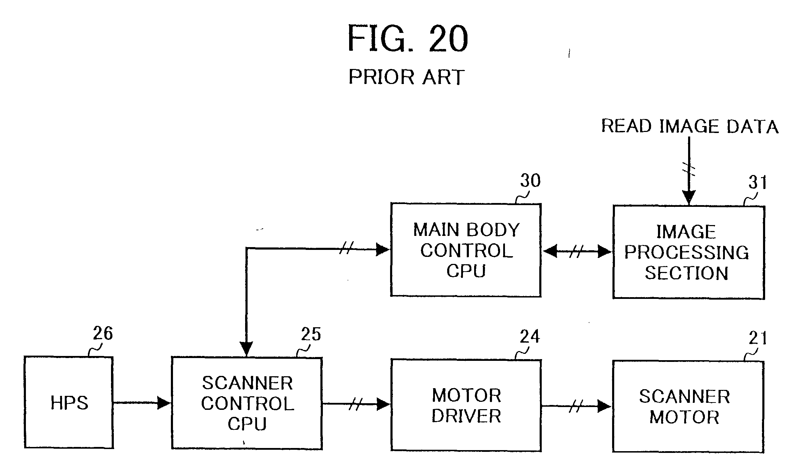

This initializing process of the scanner may be performed by controlling the movement of the carriage independently. Fig. 20 is a block diagram illustrating an example of a system for controlling a movement of the carriage independently. An output of the HPS 26 is input to a scanner control CPU 25. The scanner control CPU 25 controls the motor driver 24 for the scanner motor 21 independently of the main body control CPU 30. According to this system, a home position determining operation of the scanner is performed without waiting for completion of the initializing process of the main body, thereby reducing the time required to initialize the scanner.

Conventionally, the time required to perform the initializing process of the scanner, such as a home position determining operation and an automatic adjustment, is not longer than the time required to warm-up the main body. Therefore, the time required to initialize the scanner has not been an important factor in the amount of time required to place the DPPC in an operational state (i.e., in a startup time).

However, considerable efforts have been made to reduce the startup time of the DPPC. As a result, the time required for a warm-up process of the main body has drastically been shortened. Therefore, the time required to initialize the scanner is now an important factor in the amount of time required to put the DPPC in an operational state.

### SUMMARY OF THE INVENTION

The present invention has been made in view of the above-mentioned and other problems and addresses the above-discussed and other problems.

The present invention advantageously provides a novel image processing apparatus, method, and computer program product that can perform an initializing process of a scanner in a short period of time.

According to an example of the present invention, the image processing apparatus includes a carriage configured to carry an image reading device, a white plate configured to be read by the image reading device for adjusting a reading level of the image reading device, a home position sensor configured to detect a position of the carriage, and a controller configured to control a movement of the carriage. The controller moves the carriage based on an output of the home position sensor to perform an initializing process of the image reading device including a homing operation and a white plate reading operation,

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
Fig. 1 is a schematic drawing illustrating a construction of a DPPC according to an example of the present invention;
Fig. 2 is a schematic drawing illustrating details of a scanner unit in Fig. 1;
Fig. 3 is a flowchart showing an initializing operation performed when a power switch is turned on or when a return operation from a shutdown state is performed;
Fig. 4 is a timing diagram showing an operation of the initializing process performed when a position of a carriage is shifted to a side of a white plate with respect to a turning point of an output of a home position sensor;
Fig. 5 is a timing diagram showing an operation of the initializing process performed when the carriage is positioned close to the turning point of the output of the home position sensor;
Fig. 6 is a timing diagram showing an operation of the initializing process performed when the position of the carriage is shifted to a side of a physical restrictive position with respect to the turning point of the output of the home position sensor;
Fig. 7 is a flowchart illustrating an operation of the carriage when a main body of the DPPC is put in a shutdown state from a standby state;
Fig. 8 is a flowchart showing the operation performed in Fig. 7;
Fig. 9 is a flowchart showing an initializing operation performed when a return operation from a shutdown state is performed;
Fig. 10 is a timing diagram showing an operation of the carriage when the carriage is positioned in a white plate range;
Fig. 11 is a timing diagram showing an operation of the carriage when a position of the carriage is slightly shifted to the side of the turning point of the output of the home position sensor with respect to the white plate;
Fig. 12 is a timing diagram showing an operation of the carriage when the carriage is positioned outside the white plate range;
Fig. 13 is a timing diagram showing an operation of the carriage when a position of the carriage is shifted to a side of a physical restrictive position with respect to the output of the home position sensor;
Fig. 14 illustrates three ranges (i.e., HPS effective range, white plate effective range, original document reading range) provided in order along the track of the carriage;
Fig. 15 is a flowchart showing a conventional initializing operation performed when a power switch is turned on or when a return operation from a shutdown state is performed;
Fig. 16 is a timing diagram showing an operation of the initializing process performed in Fig. 15 when a position of a carriage is shifted to a side of a white plate with respect to a turning point of an output of a home position sensor;
Fig. 17 is a timing diagram showing an operation of the initializing process performed in Fig. 15 when the carriage is positioned close to the turning point of the output of the home position sensor;
Fig. 18 is a timing diagram showing an operation of the initializing process performed in Fig. 15 when the position of the carriage is shifted to a side of a physical restrictive position with respect to the turning point of the output of the home position sensor;
Fig. 19 is a block diagram illustrating a conventional system in which a movement of the scanner is controlled by a control section of a main body of the DPPC; and
Fig. 20 is a block diagram illustrating a conventional system in which the movement of the scanner is controlled by a control section of the scanner.

### DETAILED DESCRIPTION OF THE PREFERRED EMBODIMENTS

Referring now to the drawings, wherein like reference numerals designate identical or corresponding parts throughout the several views, an example of the present invention is now described below referring to attached figures. According to the example, the present invention is applied to a DPPC (i.e., Digital Plain Paper Copier) as an image forming apparatus.

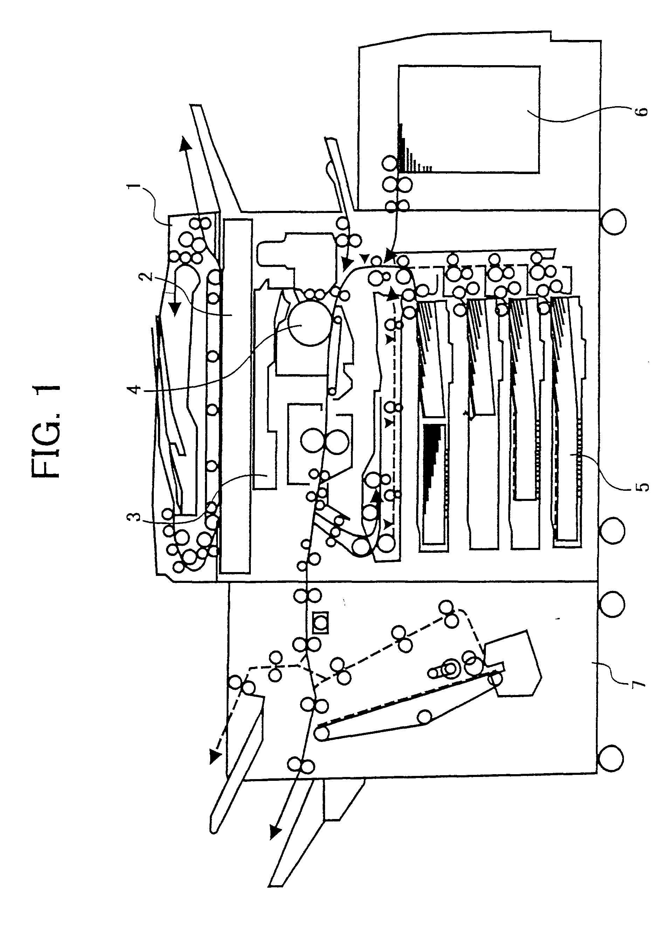

Fig. 1 is a schematic drawing illustrating an overall construction of the DPPC according to the present invention. As shown in Fig. 1, the DPPC includes an automatic document feeder 1, a scanner unit 2, a writing unit 3, a processing unit 4, a first sheet feeding unit 5, a second sheet feeding unit 6, and a sheet discharging unit 7.

A summary of the operation of the DPPC is now explained. An original document placed on a document feeding tray provided in the automatic document feeder 1 is fed to a predetermined position on a platen arranged in the scanner unit 2 by a document feeding device, when a start key provided in an operation unit (not shown) is depressed. An image of the original document is read by the scanner unit 2 and the original document is then discharged to a document discharging tray. Further, the reading operation of an image of the original document is automatically repeated one after another, when there are a plurality of original documents in the document feeding tray. In the writing unit 3, a laser beam is emitted according to imaging data obtained by reading the image of the original document in the scanner unit 2. A latent image is then formed on a surface of a photoconductive element. The latent image formed on the surface of the photoconductive element is developed into a toner image by the developing section in the processing unit 4. The toner image is then transferred onto a transfer sheet supplied either from the first sheet feeding unit 5 or the second sheet feeding unit 6. The toner image transferred onto the transfer sheet is then fixed by the fixing section in the processing unit 4. The transfer sheet carrying the fixed image is discharged to an exit tray by the sheet discharging unit 7.

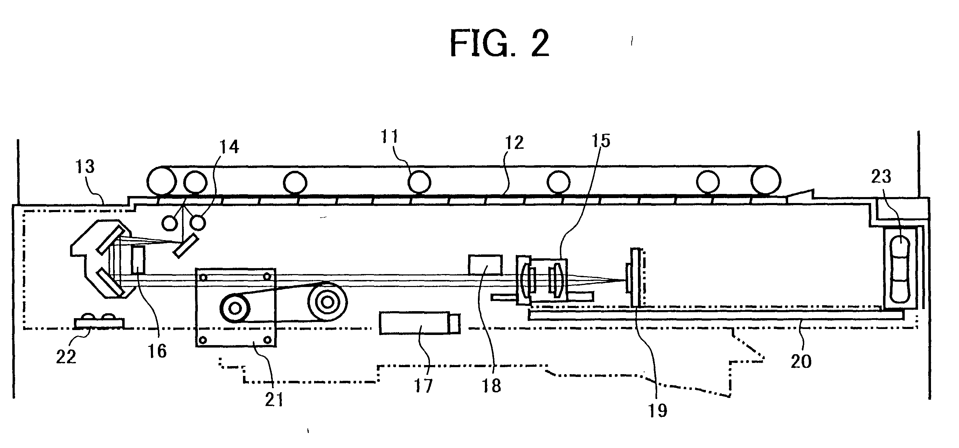

Details of the scanner unit 2 of the DPPC are described below. Fig. 2 illustrates a construction of the scanner unit 2 shown in Fig. 1. The scanner unit 2, according to an example of the present invention, includes a document feeding belt 11, a platen 12, a white plate 13, a lamp 14, and a lens 15. The scanner unit 2 further includes a HPS (i.e., Home Position Sensor) 16, a first document size detection sensor 17, a second document size detection sensor 18, a sensor board 19, a scanner control board 20, the scanner motor 21, a heater 22, and a cooling fan 23.

In the scanner unit 2, an original document placed on the platen 12 is conveyed by the document feeding belt 11 and is irradiated with the lamp 14. The light reflected from the original document is then reflected by three mirrors to the lens 15 so as to form an image on a CCD (i.e., Charge-Coupled Device) image sensor provided on the sensor board 19. The lamp 14 and a group of mirrors are carried by a carriage which is driven by the scanner motor 21 with a wire. These components provide an image obtained while scanning an original document to the CCD image sensor arranged on the sensor board 19. The CCD image sensor then converts the received light into an electric signal, and transmits the electric signal to an image processing section of the scanner control board 20 as the image data of the original document.

The first and second document size detection sensors 17 and 18 detect the size of the original document. A control section of a main body of the DPPC (not shown) directly controls an initializing process (such as a home position determining operation and an adjustment of an output power level of an image reading section) and the scanner motor 21 which performs a scanning operation on an original document. The control section of the main body of the DPPC controls the whole system relation and the imaging sequence. A diagram in Fig. 19 illustrating a configuration of a control system corresponds to this direct control system of the main body of the DPPC. An image of the white plate 13 is read, and the read image is used as reference data for adjusting an output power level of the image reading section. The scanner control board 20 controls the heater 22 to prevent a condensation of dew and the cooling fan 23.

An initializing process of a scanner according to the present invention, which can be applied to the DPPC, is described below referring to following examples. According to a first example of the present invention, the direction of movement of the carriage is determined based on an output of the home position sensor 16 when a power switch is turned on or when an instruction for a return operation from a shutdown state is provided (hereinafter referred to as a power-on time). Thus, a moving distance of the scanner to a point where the output of the home position sensor 16 turns to being effective from being ineffective or vice versa (i.e., changing point) is shortened and a reference position of the scanner is detected quickly (herein a provisional reference position is detected), resulting in a shortened period of time required for an initialing process of the scanner.

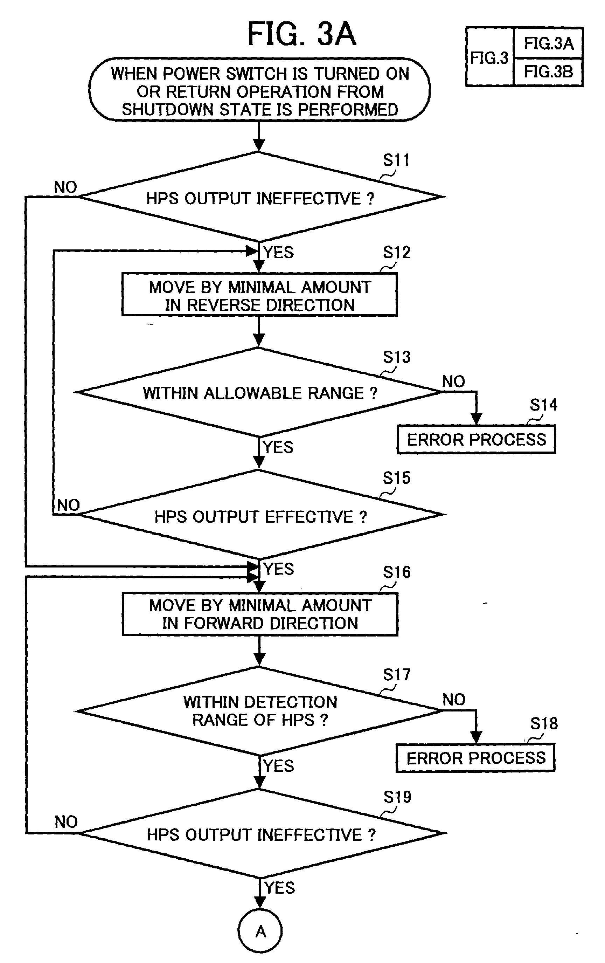

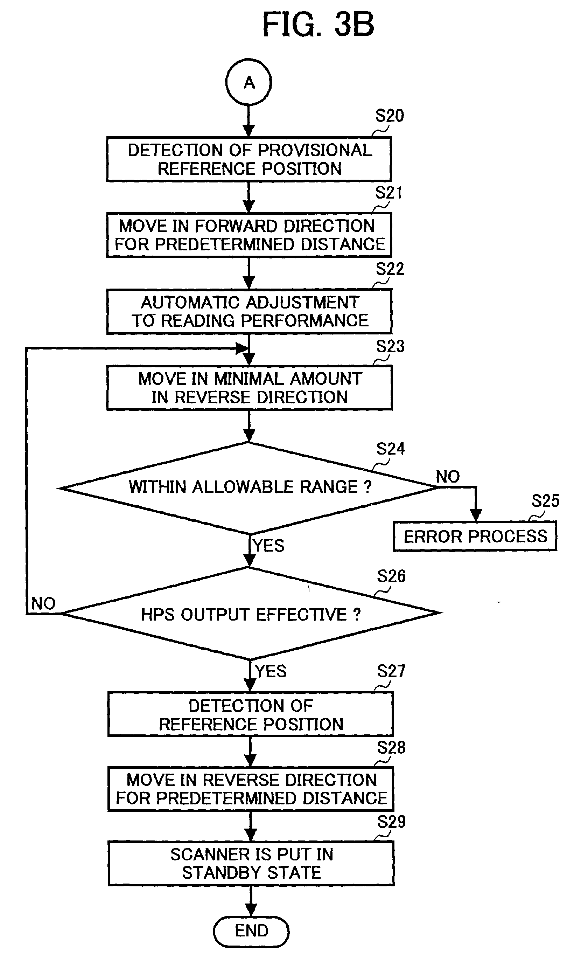

An initializing process operation according to an example of the present invention is described below referring to a flowchart in Fig. 3 which illustrates initializing process steps of the scanner when a power switch is turned on or when a return operation from a shutdown state is performed. According to the steps, whether or not the output of the home position sensor 16 is ineffective is judged firstly in step S11 to determine whether or not the carriage is positioned within a detection range of the home position sensor 16 at a power-on time. When the output of the home position sensor 16 is judged to be ineffective (i.e. when the carriage is positioned in a side of the white plate 13 with respect to the changing point of the output of the home position sensor 16), whether or not the output of the home position sensor 16 changes to being effective is checked at step S15 while moving the carriage by a minimal amount in the reverse direction toward the changing point of the output of the home position sensor 16 at step S12. If it is determined that the output of the home position sensor 16 changes to being effective, the carriage is then moved in the forward direction toward the white plate 13 at step S16. If the output of the home position sensor 16 does not change to being effective even if the carriage is moved in the reverse direction within an allowable range at step S12 (i.e., No at step S13), it is determined that the scanner is malfunctioning. Error processes, for example, to stop the operation, are performed at step S14.

Then, whether or not the output of the home position sensor 16 changes to being ineffective is checked at step S19 while moving the carriage in the forward direction by a minimal amount toward the white plate 13 at step S16. If the output of the home position sensor 16 changes to being ineffective, the position of the scanner is detected as the provisional reference position for subsequent scanning operations at step S20. If the output of the home position sensor 16 does not change to being ineffective even if the carriage is moved for a predetermined distance at step S16 (i.e., No at step S17), it is determined that the scanner is malfunctioning. Error processes, for example, to stop the operation, are performed at step S18.

The carriage moves in the forward direction for a predetermined distance at step S21 from the provisional reference position detected at step S20 to reach a position where the white plate 13 is read. An automatic adjustment to the reading performance of the scanner is made based on a read value of the white plate 13 at step S22. After the adjustment has been made, the carriage moves to a standby position (i.e., a position where the carriage is in a standby state until an instruction to perform a reading operation of an original document is provided). The reference position, which is used when controlling the position of the carriage for reading an original document, is detected while the carriage is moved to the standby position. That is, in the flowchart, whether or not the output of the home position sensor 16 changes to being effective is detected at step S26 while moving the carriage in the reverse direction by a minimal amount toward the changing point of the output of the home position sensor 16 at step 523. If the output of the home position sensor 16 changes to being effective, a position of the carriage is detected at step S27 as the reference position of the carriage for subsequent scanning operations.

If the output of the home position sensor 16 does not change to being effective even if the carriage is moved in the reverse direction within an allowable range at step S23 (i.e., No at step S24), it is determined that the scanner is malfunctioning. Error processes, for example, to stop the operation, are performed at step S25.

After the reference position has been detected, the carriage moves in the reverse direction for a predetermined distance from the reference position at step S28 so as to put the carriage into a standby state at a predetermined position. The scanner remains in the standby state at step S29. The process is then finished.

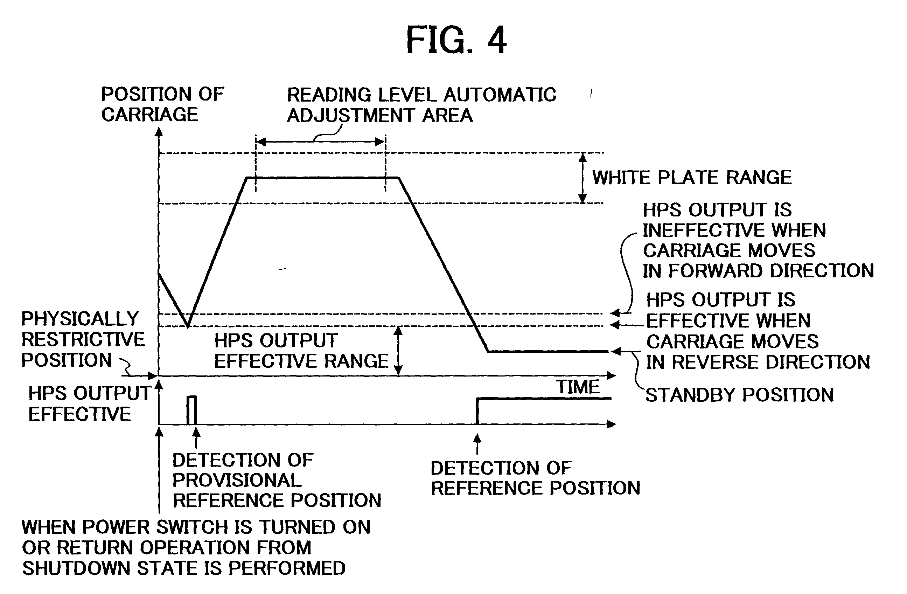

The initializing process operation performed according to the above-described processing steps is further explained referring to timing diagrams in Figs. 4 through 6 which show a mutual relationship between a position of the carriage and an output of the home position sensor 16.

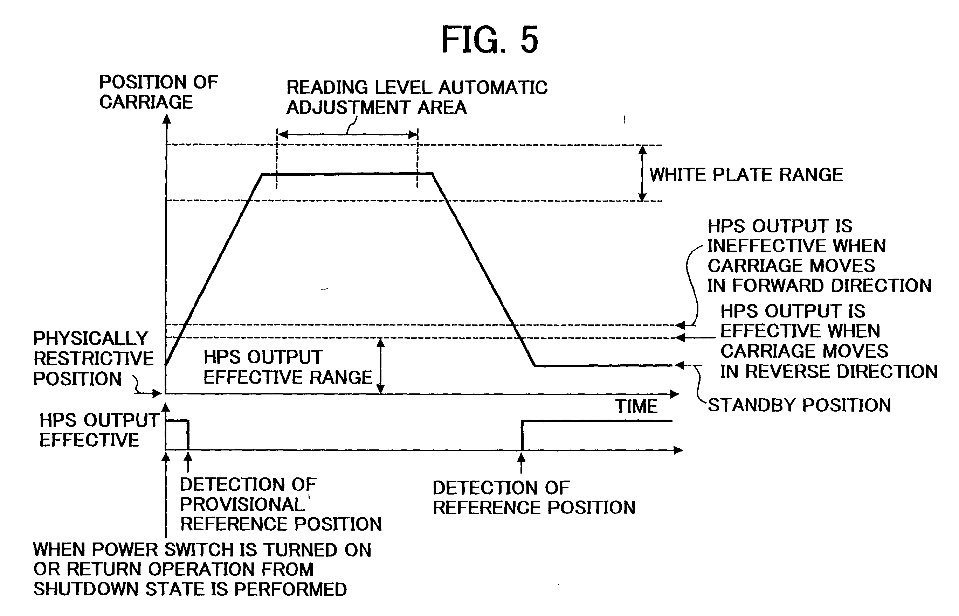

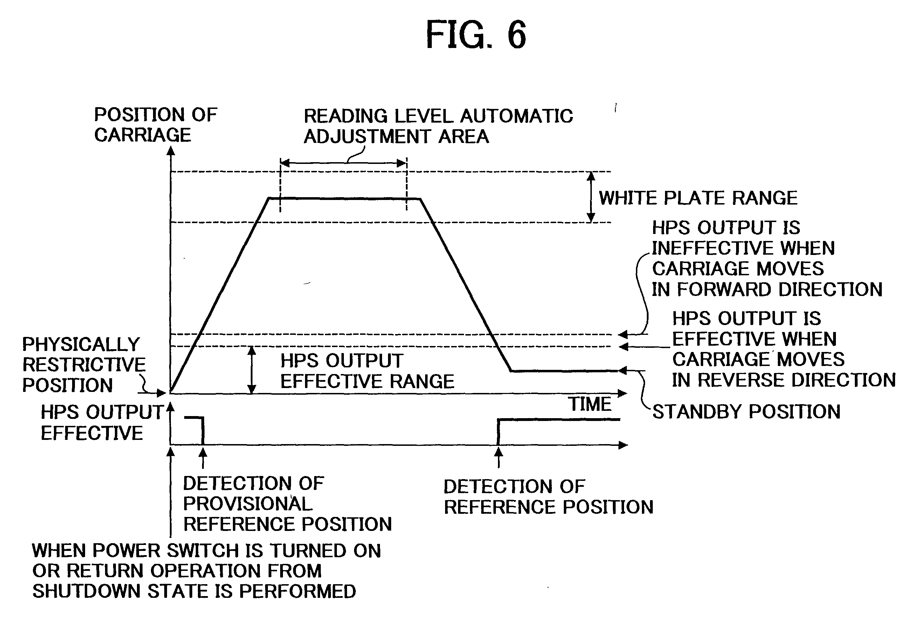

The timing diagrams in Figs. 4 through 6 illustrate that the carriage is located in a different position at a power-on time. In Fig. 4, the position of the carriage is shifted towards the white plate 13 with respect to the changing point of the home position sensor (HPS) 16 at which the output of the HPS changes to being effective. In Fig. 5, the carriage is positioned close to the changing point of the output of the home position sensor 16. In Fig. 6, the position of the carriage is shifted to a physically restrictive position with respect to the changing point of the output of the home position sensor 16. According to these examples of the present invention, a sensor having a hysteresis property, so that the changing point of the output differs depending on the direction of movement of the carriage, is used as the home position sensor 16 to detect effective and ineffective positions. A reference position of the carriage is detected when the output of the home position sensor changes to being effective from being ineffective while the carriage is moving in the reverse direction.

According to an example of the present invention, the position of the carriage with respect to the changing point of the home position sensor 16 is firstly determined based on whether or not the output of the home position sensor 16 is ineffective. The direction of movement of the carriage is determined according to the determined position of the carriage. Therefore, the carriage reaches the changing point of the output of the home position sensor 16 by moving in the shortest distance wherever the carriage is positioned and performs a provisional home position determination operation there. In the provisional home position determination operation, the provisional reference position of the scanner for performing subsequent scanning operations is detected when the output of the home position sensor 16 changes to being ineffective while the carriage is moving in the forward direction. Therefore, when the carriage is located at the positions shown in Fig. 5 or 6, the provisional home position determination operation is performed while the carriage is moving in the forward direction as determined according to the determined position of the carriage. However, when the carriage is located at the position shown in Fig. 4, the carriage firstly moves in the reverse direction, and then moves in the forward direction when the output of the home position sensor 16 changes to being effective.

In the above-described provisional home position determination operations, the least time is required for detecting the provisional reference position when the carriage is located at the position shown in Fig. 5, however, a comparable time is required when the carriage is located at the positions shown in Fig. 4 or Fig. 6. That is, according to the example shown in Fig. 4, an extra time required in the example shown in Fig. 16 is not required. Conventionally, a reference original position of a scanner is determined when an output of a home position sensor changes to being effective from being ineffective while a carriage is moving from the white plate to the home position sensor. The reference position of the scanner is detected when a power switch is turned on or when a return operation from a shutdown state is performed. At a power-on time, the carriage unconditionally moves in the forward direction toward the white plate until the carriage reaches a position where the output of the HPS is ineffective before an operation is performed to detect a reference position of the carriage (i.e., home position determining operation). Thus, the time required to detect the reference position of the carriage is shortened as compared to the prior art even if the initial position of the carriage is shifted toward the while plate 13 with respect to the changing point of the home position sensor 16 at a power-on time, i.e. at which the output of the HPS changes to being effective.

Conventionally, the carriage moves to the reference position of the carriage to be in a standby state after an automatic adjustment to the reading performance of the scanner has been made. However, according to the above example of the present invention, the carriage moves in the reverse direction from the position of the white plate 13 where the automatic adjustment to the reading performance of the scanner is performed. A reference position of the scanner is detected when the output of the home position sensor 16 changes to being effective from being ineffective while the carriage is moving in the reverse direction. The carriage further moves in the reverse direction for a predetermined distance to reach a standby position. That is, the carriage stays at the standby position where it is within a detective range of the home position sensor 16. Therefore, the DPPC is put in a shutdown state while the carriage stays at the standby position. An output of the home position sensor 16 is effective when a return operation from the shutdown state is performed at a power-on time. Thus, the optimum operations as described above i.e., (1) to move the carriage in the forward direction and detect a provisional reference position of the carriage, (2) to make an automatic adjustment to the image reading performance of the scanner, and (3) to move the carriage in the reverse direction and detect a reference position of the carriage, are performed.

Next, a second example of the present invention is described below. The second example relates to an initializing process suited when the DPPC is put in a shutdown state. In the shutdown state, a power supply is suspended when a shutdown condition is satisfied e.g., when a power key (i.e., soft key) is depressed or when the DPPC is not operated for a predetermined period of time. In the above-described first example, it is assumed that an initializing process is started while the carriage is preferably in the detection range of the home position sensor 16 so that the example can be applied both when a power switch is turned on and when a return operation from a shutdown state is performed. According to the second example, the time required to initialize the scanner is further reduced by reducing the distance that the carriage moves when the return operation from the shutdown state is performed. The position of the carriage in a shutdown state is regulated to the position of the white plate 13 where an automatic adjustment to the reading performance of the scanner is made. Thus, an initializing process of the scanner is performed in a short time when the return operation from the shutdown state is performed.

Therefore, the carriage has to move from a standby position where the output of the home position sensor 16 is effective to a white plate range while the main body is put in a shutdown state from a standby state in order to regulate the position of the carriage to the position of the white plate 13 in the shutdown state.

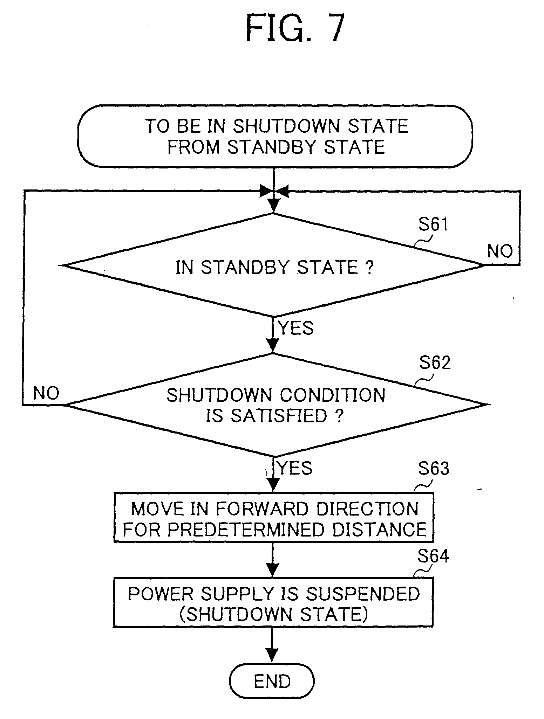

Fig. 7 is a flowchart illustrating an operation of the carriage when the main body is put in the shutdown state from the standby state as described above. According to the processing steps in the flowchart, whether or not the main body is in the standby state is checked at step S61. When it is determined that the main body is not in the standby state (i.e., No at step S61), the process stops until the main body is put in the standby state. If it is determined that the main body is in the standby state (i.e., Yes at step S61), whether or not a condition for being in a shutdown state is satisfied is checked at step S62. The check made at step S62 includes whether or not the power key (i.e., soft key) is depressed, or the DPPC is not operated for a predetermined period of time, etc. If the shutdown condition is not satisfied (i.e., No at step S62), the process returns to step S61.

If the condition to be in the shutdown state is satisfied at step S62 (i.e., Yes at S62), the carriage moves in the forward direction for a predetermined distance at step S63 to the white plate range because the carriage is positioned where the output of the home position sensor 16 is effective while the main body is in the standby state.

Then, a power supply is suspended to put the main body in a shutdown state at step S64. The process is then finished and the carriage remains in this state until an instruction for a return operation is provided.

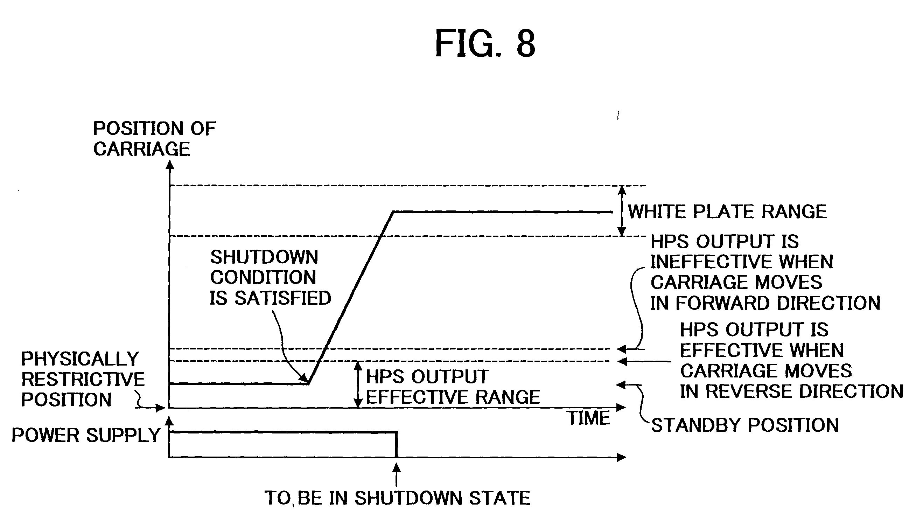

The operation to be in the shutdown state performed according to the above-described processing steps in Fig. 7 is further explained referring to the timing diagram shown in Fig. 8, which shows a mutual relationship between a position of the carriage and an output of the home position sensor 16.

According to an example shown in Fig. 8, the carriage remains in a standby state in a range where an output of the home position sensor 16 is effective. The carriage moves in the forward direction when the condition to be in a shutdown state is satisfied. The carriage stops when it enters into a white plate range after the carriage moves for a predetermined distance. The main body is then put in a shutdown state, i.e., the power supply is suspended. The carriage remains at this position until an instruction for a return operation from the shutdown state is provided as long as a physical shock is not applied.

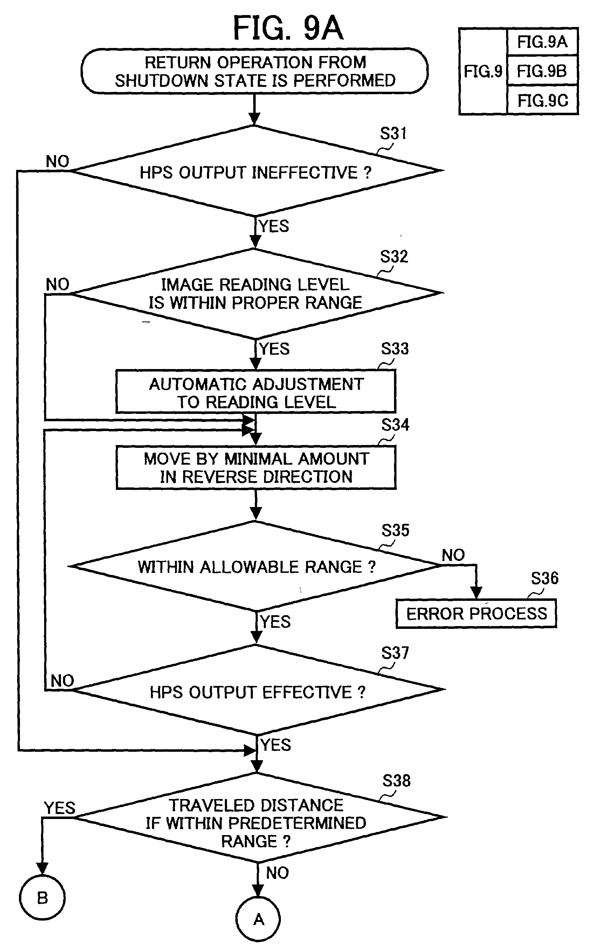

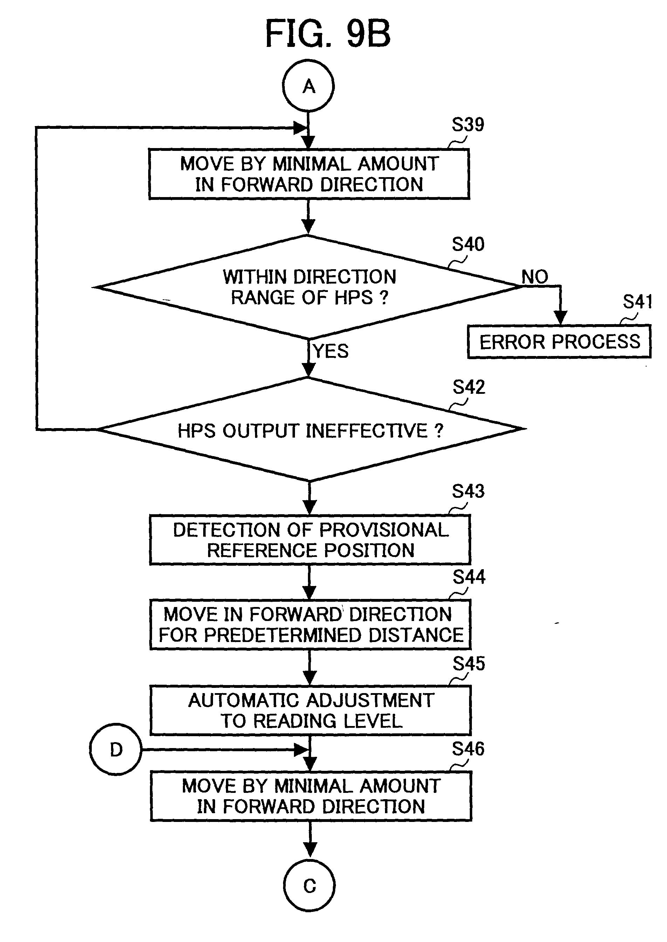

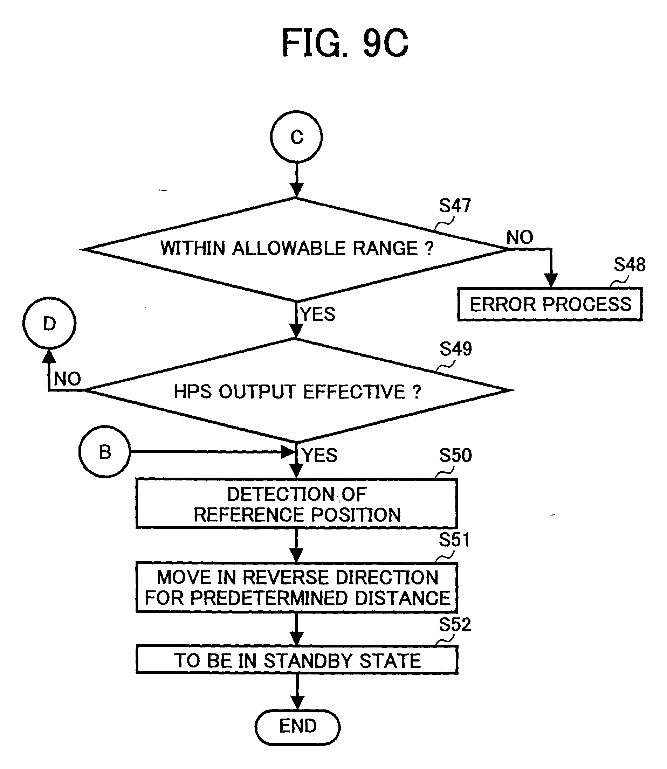

An initializing process according to an example of the present invention is described below referring to a flowchart in Fig. 9 which illustrates initializing process steps of the scanner when a return operation from a shutdown state is performed. According to the steps in the flowchart illustrated in Fig. 9, the carriage performs an optimum operation assuming that the carriage remains stopped in the white plate range based on the steps described in Fig. 7. Therefore, whether or not an image reading level of the scanner is within a proper range is checked at step S32. When the image reading level is within the proper range, the scanner makes an automatic adjustment to its image reading level. A reference position of the carriage is detected while the carriage is moving to a position where the carriage is put in a standby state. According to the first example of the present invention, the carriage moves to the white plate range to read the white plate 13 because the carriage is generally positioned adjacent to a changing point of the home position sensor 16, i.e. at which the output of the HPS changes to being effective. However, in this second example, the operation of the carriage to move to the white plate range is eliminated, thereby reducing the time required to initialize the scanner.

According to the steps in Fig. 9, whether or not the output of the home position sensor 16 is ineffective is checked at step S31 in order to determine whether or not the carriage is positioned within a detection range of the home position sensor 16 when an instruction for a return operation from a shutdown state is provided. If it is determined that the output of the home position sensor 16 is not ineffective (i.e., No at step S31), the process steps S32 through S37 (to be described below) are skipped and the process proceeds to step S38 (to be described below).

If the output of the home position sensor is ineffective (i.e., Yes at step S31) i.e., the carriage is positioned on the side of the white plate 13 with respect to the changing point of the home position sensor 16 and it is checked at step S32 whether or not an image reading level of the scanner is within a proper range.

Whether or not the image reading level of the scanner is within a predetermined proper range is checked, for example, by judging whether or not the image reading level at this time is within the proper range. The predetermined proper range is set based on a stored result of the automatic adjustment which was made last time. When the process steps shown in Fig.7 are normally performed when the main body is put in a shutdown state from a standby state and the DPPC stays in the shutdown state, the level of the read image of this time is generally determined to be within the proper range. However, this check is made in consideration that an abnormal performance of the process steps may happen.

When it is determined at step S32 that the image reading level of the scanner is within the predetermined proper range, an automatic adjustment to an image reading level of the scanner is made at step S33. Then, whether or not an output of the home position sensor 16 changes to being effective is checked at step S37 while the carriage is moving by a minimal amount in the reverse direction toward the changing point of the home position sensor 16 at step S34. The processes at steps S34 through S37 are performed even if it is determined that the image reading level of the scanner is not within the predetermined proper range at step S32. It is determined that the scanner is malfunctioning (i.e., No at S35) and error processes (e.g. to stop the operation) are performed at step S36, if the output of the home position sensor 16 does not change to being effective even if the carriage is moved beyond an allowable range in the reverse direction at step S34.

If the output of the home position sensor 16 changes to being effective at step S37, it is determined at step S38 whether or not the traveled distance of the carriage (i.e., traveled distance from that position where the instruction for the return operation from the shutdown state is provided to that position where the output of the home position sensor 16 changes to being effective)is within a predetermined range. That is, it is determined whether or not the carriage was positioned at a position, where the scanner can normally read the white plate 13 when the instruction for the return operation from the shutdown state is provided.

If it is determined that the carriage was properly positioned at step S38, the automatic adjustment made at step S33 is determined to be effective. The process then proceeds to step S50 (to be described below) by skipping the process steps S39 through S49 (to be described below).

If it is not determined that the carriage was properly positioned at step S38 (i.e., No at S38), the carriage moves to the white plate 13 to read it and returns to the current position.

Then it is checked at step S42 whether or not the output of the home position sensor 16 changes to being ineffective while the carriage is moving by a minimal amount in the forward direction toward the white plate 13 at step S39. When the output of the home position sensor 16 changes to being ineffective (i.e., Yes at step S42), the position of the scanner is detected at step S43 as a provisional reference position for subsequent scanning operations. If the output of the home position sensor 16 does not change to being ineffective (i.e., No at step S40) even if the carriage moves for a predetermined distance at step S39, it is determined that the scanner is malfunctioning and error processes (e.g. to stop the operation) are performed at step S41. If the output of the home position sensor 16 does not change to being ineffective at step S42 (i.e., No at step S42), the process returns to step S39 to further move the carriage by a minimal amount in the forward direction. The carriage moves in the forward direction for a predetermined distance at step S44 from the provisional reference position detected at step S43 to reach a position where the white plate 13 is read. An automatic adjustment to the reading performance of the scanner is made at step S45 based on an image reading value from the white plate 13.

Once the adjustment is completed, the carriage moves to a standby position (i.e., the position where the scanner is put in a standby state until an instruction for reading an original document is provided). A reference position, which is used when controlling a position of the carriage for reading an original document, is detected while the carriage is moving to the standby position. As a process step for detecting the reference position, it is checked at step S49 whether or not the output of the home position sensor 16 changes to being effective while moving the carriage by a minimal amount in the reverse direction toward the changing point of the home position sensor 16 at step S46. When the output of the home position sensor 16 changes to being effective, the position of the scanner is detected as the reference position at step S50. If the output of the home position sensor 16 does not change to being effective (i.e., No at step S47) even if the carriage is moved in the reverse direction within an allowable range at step S46, it is determined that the scanner is malfunctioning and error processes (e.g. to stop the operation) are performed at step S48.

When the output of the home position sensor 16 changes to being effective at steps S37 and S49, the reference position is detected and determined. After the reference position has been detected, the carriage moves in the reverse direction for a predetermined distance at step S51 from the original position to reach a position where the scanner is put in a standby state at step S52. The process is then finished.

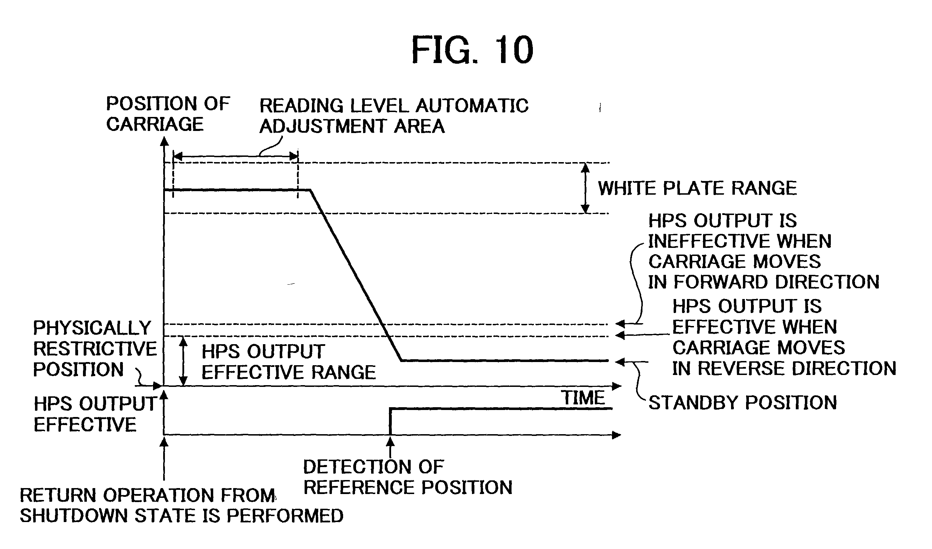

The initializing process operation performed according to the above-described processing steps is further described referring to timing diagrams in Figs. 10 through 13 which show a mutual relationship between a position of the carriage and an output of the home position sensor 16.

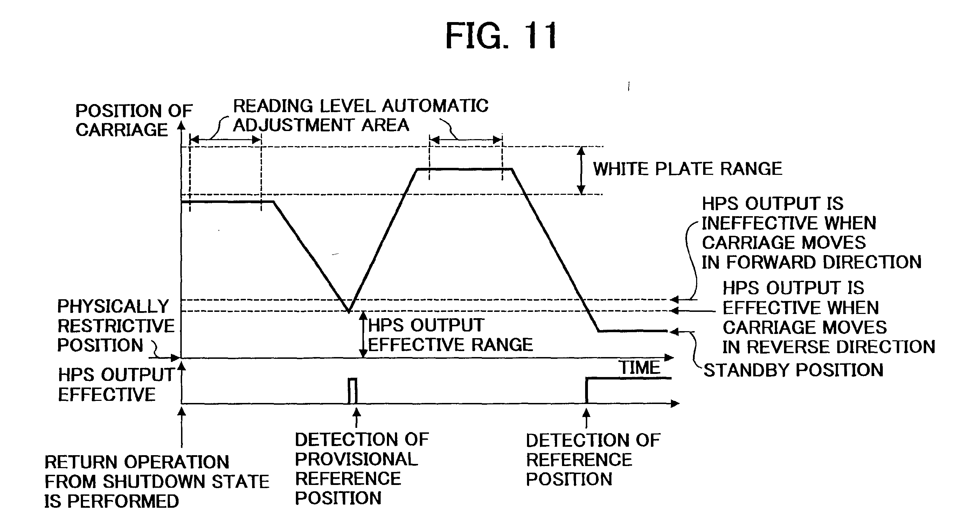

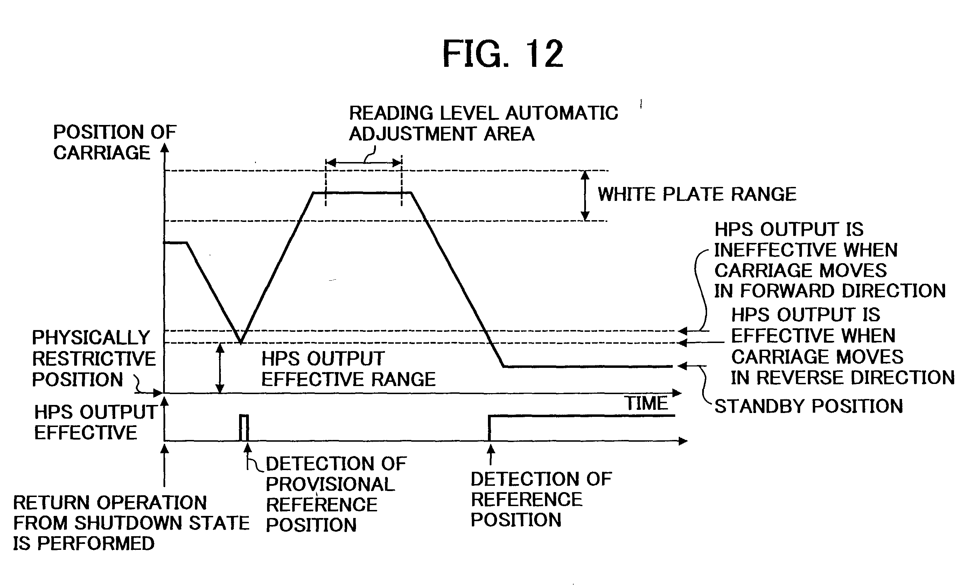

The timing diagrams in Figs. 10 through 13 illustrate that the carriage is located at different positions (i.e., at different position at the time of shutdown of the apparatus) when an instruction for a return operation from a shutdown state is provided. In Fig. 10, the carriage is positioned in a white plate range (thus, an output of the home position sensor 16 is ineffective, an image reading level of the scanner is within a proper range, and the shutdown position with respect to the reference position is proper). In Fig. 11, the position of the carriage is slightly shifted towards the changing point of the home position sensor 16 with respect to the white plate 13 (thus, the output of the home position sensor 16 is ineffective, the image reading level of the scanner is within a proper range, however, the shutdown position with respect to the reference position is not proper). In Fig. 12, the position of the carriage is further shifted towards the changing point of the home position sensor 16 with respect to the white plate 13 (thus, the output of the home position sensor 16 is ineffective, the image reading level of the scanner is not within a proper range, the shutdown position with respect to the reference position is not proper).

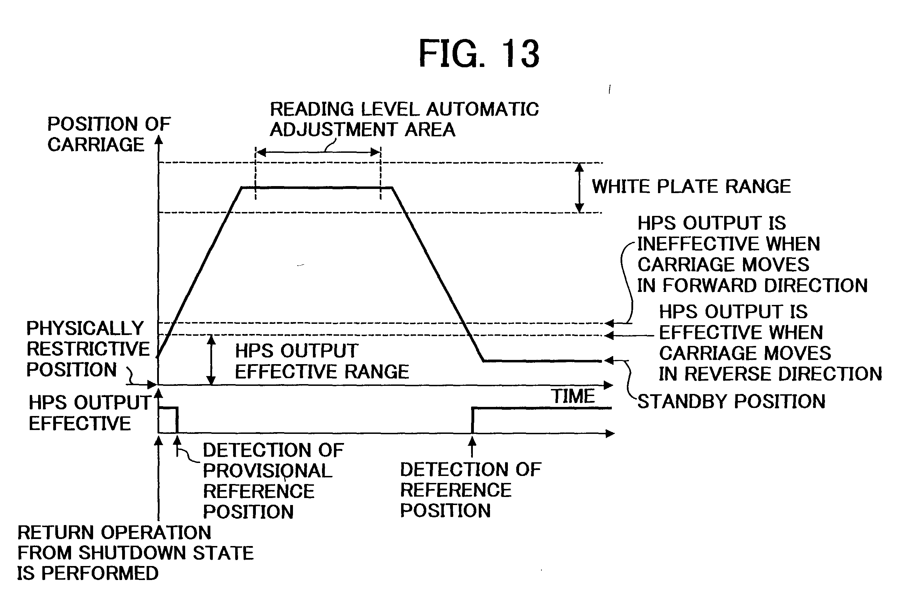

In Fig. 13, the position of the carriage is shifted to a physically restrictive position with respect to the changing point of the home position sensor 16 (thus, the output of the home position sensor 16 is effective, the image reading level of the scanner is not within a proper range, the shutdown position with respect to the reference position is not proper). According to these examples of the present invention, a sensor having a hysteresis property, whose changing point of the output differs depending on the direction of movement, is used as the home position sensor 16. The reference position of the carriage is then detected when the output of the home position sensor 16 changes to being effective from being ineffective while the carriage is moving in the reverse direction.

According to these examples, whether or not the output of the home position sensor 16 is ineffective is checked at first to distinguish the shutdown position of the carriage shown in Fig. 13 from the positions shown in Figs. 10 through 12. According to the example shown in Fig. 13, the carriage moves to the white plate 13 to read it when a return operation from a shutdown state is started. The carriage moves to a standby position once an automatic adjustment to the image reading level of the scanner is completed. A reference position of the scanner is detected while the carriage is moving to the standby position.

Next, whether or not the image reading level of the scanner is within a proper range even though the output of the home position sensor 16 is ineffective is checked to distinguish the shutdown position of the carriage shown in Fig. 12 from the positions shown in Figs. 10 and 11. According to the example shown in Fig. 12, a provisional reference position of the scanner is detected immediately after it has been determined that the image reading level of the scanner is not within the proper range. Thereafter, the carriage moves to the standby position after the same operations as performed in Fig. 13 are performed.

Further, it is checked whether or not the traveled distance of the carriage from the shutdown position to a position where the output of the home position sensor 16 changes to being effective is within a predetermined range in order to distinguish the shutdown position of the carriage shown in Fig. 11 from the position shown in Fig. 10. If the carriage is at the shutdown position shown in Fig. 11, the output of the home position sensor 16 is ineffective and the image reading level of the scanner is within a proper range, however, the shutdown position with respect to the reference position of the scanner is not proper. That is, there is a possibility that a proper automatic adjustment to the image reading level of the scanner may not be made because the shutdown position is slightly shifted toward the changing point of the output of the home position sensor 16 with respect to the white plate 13. According to an example shown in Fig. 11, the automatic adjustment to the reading level of the scanner is made immediately after a return operation from a shutdown state is started. When the shutdown position of the carriage is not proper with respect to the reference position (as a result, it will be a provisional reference position), the automatic adjustment to the reading level of the scanner is made again. Thereafter, the carriage moves to the standby position after the same operations as performed in Figs. 12 and 13 are performed.

In the example shown in Fig. 10, the output of the home position sensor 16 is ineffective, the image reading level of the scanner is within a proper range, and the shutdown position of the carriage is proper with respect to the reference position. That is, the carriage remains in the white plate range according to the shutdown process steps shown in Fig. 7. As illustrated in Fig. 10, the automatic adjustment to the image reading level of the scanner is performed immediately when a return operation from a shutdown state is started. Because the shutdown position of the carriage is proved to be proper when the shutdown position is checked while the carriage moves to a standby position, a reference position of the scanner is detected. Thereafter, the carriage performs an operation to move to the standby position. When an optimum operation as described above is performed, an operation performed in the first example is eliminated i.e., the operation in which the carriage moves to the white plate range to read the white plate 13 which is performed in the first example because the carriage is generally positioned adjacent to the changing point of the home position sensor 16. Thus, the time required to initialize the scanner is reduced when a return operation from a shutdown state is performed.

In the above-described examples of the present invention, a sensor is used as the home position sensor 16, which has a hysteresis property so that the changing point of an output signal of the sensor differs depending on the direction of movement of the carriage. However, a sensor that does not have such a hysteresis property may be used instead, i.e., a sensor where the changing point of the output does not differ depending on the direction of movement of the carriage. When a sensor that does not have such a hysteresis property is used, the process steps shown in Figs. 3 and 9 are basically performed.

However, an operation to reverse the direction of movement of the carriage is performed when an output of the home position sensor 16 changes to being effective from being ineffective when a sensor without such a hysteresis property is used as the home position sensor 16, so that the carriage reverses its direction of movement approximately at the same position identified as the provisional reference position. Therefore, a setting of the operational conditions has to be changed in order to perform an appropriate operation. The above-described operation to reverse the direction of movement of the carriage is performed between the moment when the output of the home position sensor 16 changes to being effective at step S15 so that the carriage reverses its direction of movement and the moment when the output of the home position sensor 16 changes to being ineffective at step S19 in Fig. 3.

Further, in Fig. 9, the operation is performed between the moment when the output of the home position sensor 16 changes to being effective at step S37 so that the carriage reverses its direction of movement and the moment when the output of the home position sensor 16 changes to being ineffective at step S42.

In addition, an operation can be performed by preparing and using a program or computer program product, which-causes the procedures of the initializing process described as examples of the present invention to be performed, e.g. the home position determining operation, an adjustment of the output level of a reading section, etc. Execution of initializing process is controlled by a control section of a main body of the DPPC. The computer program product can be recorded on a commonly known computer-readable recording media. The recording media is used under the control of the control section of the main body of the DPPC, or the program can be installed into a memory device so as to perform an initializing process by reading the program.

Obviously, numerous additional modifications and variations of the present invention are possible in light of the above teachings. It is therefore to be understood that within the scope of the appended claims, the present invention may be practiced otherwise than as specifically described herein.

This document claims priority and contains subject matter related to Japanese Patent Application No. 2000-232198, filed on July 31, 2000 and Japanese Patent Application No. 2001-179562, filed on June 14, 2001, and the entire contents thereof are herein incorporated by reference.

## Claims

1. An image processing apparatus, comprising:
a carriage configured to carry an image reading device (14, 19);
a white plate (13) configured to be read by the image reading device for adjusting a reading level of the image reading device, said white plate (13) being arranged above a track of said carriage;
a home position sensor (16) configured for detecting a home position of said carriage;
a controller configured to control a movement of said carriage based on an output of said home position sensor (16) for performing an initializing process of the image reading device including a home position determining operation and a white plate reading operation,
wherein said controller is configured to (1) determine a direction of movement of said carriage based on the output of said home position sensor when the initializing process is initiated, (2) perform a provisional home position determining operation of the image reading device when said home position sensor changes the output after said carriage is moved, and (3) move said carriage to a white plate reading position based on the performance of the provisional home position determining operation.

2. The image processing apparatus according to claim 1, wherein said controller is configured to move said carriage in a direction in which the output of said home position sensor (16) changes after the white plate reading operation is completed so as to perform the home position determining operation when the output of said home position sensor (16) changes.

3. An image processing apparatus, comprising:
a carriage configured to carry an image reading device (14, 19);
a white plate (13) configured to be read by the image reading device for adjusting a reading level of the image reading device, said white plate (13) being arranged above a track of said carriage;
a home position sensor (16) configured for detecting a home position of said carriage;
a controller configured to control a movement of said carriage based on an output of said home position sensor (16) for performing an initializing process of the image reading device including a home position determining operation and a white plate reading operation,
wherein said controller is configured to (1) determine whether or not an output level of the image reading device is within a proper range when the initializing process is initiated, (2) move said carriage in a direction in which the output of said home position sensor changes after the white plate reading operation is completed when the output level of the image reading device is within a proper range, and (3) perform the home position determining operation when the output of said home position sensor (16) changes.

4. The image processing apparatus according to claim 3, wherein said controller is configured to (1) move said carriage in the direction in which the output of said home position sensor (16) changes in a case where the output of the image reading device is not within the proper range when the initializing process is initiated, (2) perform a provisional home position determining operation when the output of said home position sensor changes, (3) moves said carriage to a position where said white plate is read based on the provisional home position determining operation, (4) reverse the direction of movement of said carriage to a direction in which the output of said home position sensor changes after the white plate reading operation is completed, and (5) perform the home position determining when the output of said home position sensor changes.

5. The image processing apparatus according to claim 3, wherein said controller is configured to (1) move said carriage in the direction in which the output of said home position sensor changes after the white plate reading operation is completed in a case where the output of the image reading device is within the proper range when the initializing process is initiated, (2) perform a provisional home position determining operation when the output of said home position sensor changes in a case where the output of said home position sensor changes while said carriage moves within an allowable range, (3) moves said carriage to a position where said white plate is read based on the provisional home position determining operation, (4) move said carriage in the direction in which the output of said home position sensor changes after the white plate reading operation is completed, and (5) perform the home position determining operation when the output of said home position sensor changes.

6. The image processing apparatus according to any of claims 3 to 5, wherein said controller is configured to move said carriage to a position where said white plate is read when the apparatus is put in a shutdown state.

7. An image processing apparatus, comprising:
a carriage configured to carry an image reading device (14, 19);
a white plate (13) configured to be read by the image reading device for adjusting a reading level of the image reading device, said white plate (13) being arranged above a track of said carriage;
a home position sensor (16) configured for detecting a home position of said carriage;
a controller configured to control a movement of said carriage based on an output of said home position sensor (16) for performing an initializing process of the image reading device including a home position determining operation and a white plate reading operation,
wherein said controller is configured to (1) move said carriage in a direction in which the output of said home position sensor (16) changes after the white plate reading operation is completed so as to perform the home position determining operation when the output of said home position sensor (16) changes when a power switch is turned on and to (2) move said carriage to a position where said white plate is read when a return operation from a shutdown state is performed.

8. The image processing apparatus according to any of the preceding claims, wherein said home position sensor (16) includes a sensor configured to have a property so that an output changes depending on the direction of movement of said carriage, and wherein said controller is configured to reverse the direction of movement of said carriage when the output of said home position sensor (16) changes while said carriage is moving away from said white plate (13) in a case where said carriage performs an operation in which said carriage moves from a side of said white plate (13) to a position where the output of said home position sensor (16) changes and to reverse the direction of movement of the carriage at this position.

9. The image processing apparatus according to any of claims 1 to 7, wherein said home position sensor (16) includes a sensor configured to have a property so that an output changes depending on the direction of movement of said carriage, and wherein said controller is configured to perform a provisional home position determining operation when the output of said home position sensor changes while the carriage is moving to said white plate (13).

10. The image processing apparatus according to any of the preceding claims,
wherein said controller is configured to move said carriage in a first direction so that said carriage moves from said white plate (13) to a position where the output of said home position sensor changes or in a second direction so that said carriage moves from the position where the output of said home position sensor changes to said white plate (13), and
wherein said controller is configured to stop an operation of said carriage when the output of said home position sensor (16) does not change even if said carriage moves within an allowable range.

11. A method for initializing an image processing apparatus having a carriage configured to carry an image reading device (14, 19), a white plate (13) arranged above a track of the carriage and configured to be read by the image reading device for adjusting a reading level of the image reading device, a home position sensor (16) configured for detecting a home position of the carriage, and a controller configured to control a movement of the carriage, the method comprising:
determining a direction of movement of the carriage in which an output of said home position sensor changes based on the output of the home position sensor (16) when an initializing process is initiated (S11-S15);
performing a provisional home position determining operation of the image reading device when the home position sensor changes the output after the carriage is moved (S16-S20); and
moving the carriage to a white plate reading position (S21) based on the performance of the provisional home position determining operation.

12. The method according to claim 13, further comprising:
moving the carriage in a direction in which the output of the home position sensor changes after the white plate reading operation is completed (S23-S26); and
performing the home position determining operation when the output of the home position sensor changes (S27).

13. A method for initializing an image processing apparatus having a carriage configured to carry an image reading device (14, 19), a white plate (13) arranged above a track of the carriage and configured to be read by the image reading device for adjusting a reading level of the image reading device, a home position sensor configured for detecting a home position of the carriage, and a controller configured to control a movement of the carriage, the method comprising:
determining whether or not an output level of the image reading device is within a proper range when an initializing process is initiated (S32);
moving the carriage in a direction in which the output of the home position sensor (16) changes after a white plate reading operation is completed if the output level of the image reading device is within a proper range (S34-S37); and
performing a home position determining operation when the output of the home position sensor changes (S39-S42).

14. The method according to claim 13, further comprising:
moving the carriage in a direction in which the output of the home position sensor changes in a case where the output of the image reading device is not within the proper range when an initializing process is initiated (S34-S37);
performing a provisional home position determining operation when the output of the home position sensor changes (S39-S42);
moving the carriage to a position where the white plate (13) is read (S44) based on the provisional home position determining operation;
moving the carriage in a direction in which the output of the home position sensor changes after the white plate reading operation (S45) is completed; and
performing the home position determining operation when the output of the home position sensor changes (S50).

15. The method according to claim 13, further comprising:
moving the carriage in a direction in which the output of the home position sensor changes after the white plate reading operation is completed in a case where the output of the image reading device is within the proper range when the initializing process is initiated;
performing a provisional home position determining operation when the output of the home position sensor changes in a case where the output of the home position sensor changes while the carriage moves within an allowable range;
moving the carriage to a position where said white plate (13) is read based on the provisional home position determining operation;
moving the carriage in a direction in which the output of the home position sensor changes after the white plate reading operation is completed; and
performing the home position determining operation when the output of the home position sensor (16) changes.

16. The method according to any of claims 13 to 15, further comprising:
moving the carriage to a position where the white plate (13) is read when the apparatus is put in a shutdown state.

17. A method for initializing an image processing apparatus having a carriage configured to carry an image reading device (14, 19), a white plate arranged above a track of the carriage and configured to be read by the image reading device for adjusting a reading level of the image reading device, a home position sensor configured for detecting a home position of the carriage, and a controller configured to control a movement of the carriage, the method comprising:
performing the steps recited in claim 11 when a power switch is turned on; and
performing the step recited in claim 15 when a return operation from a shutdown state is performed.

18. The method according to any of claims 11 to 17, further comprising:
employing a sensor which has a property so that an output changes depending on the direction of movement of said carriage as the home position sensor (16); and
reversing the direction of movement of the carriage when the output of the home position sensor (16) changes while the carriage is moving away from the white plate (13) in a case where the carriage moves from a side of the white plate to a position where the output of the home position sensor (16) changes and reversing the direction of movement at this position.

19. The method according to any of claims 11 to 17, further comprising:
employing a sensor which has a property so that an output changes depending on the direction of movement of said carriage as the home position sensor (16) ; and
performing the provisional home position determining operation when the output of the home position sensor changes while the carriage is moving toward the white plate (13).

20. The method according to any of claims 11 to 17, further comprising:
moving the carriage in a first direction so that the carriage moves from the white plate (13) to a position where the output of the home position sensor changes or in a second direction so that the carriage moves from the position where the output of the home position sensor changes to the white plate (13); and
stopping an operation of the carriage when the output of the home position sensor (16) does not change even if the carriage moves within an allowable range.

21. An image forming apparatus, comprising an image processing apparatus according to any of claims 1 to 10.

22. A computer program product comprising program code means for performing the steps according to any of claims 11 to 20, when said program is run on a data processing means of an image processing apparatus or of an image forming apparatus.

23. A computer program product comprising program code means according to claims 22 recorded on a data recording medium.
